# FASCICULE DE BREVET EUROPEEN

(11) **EP 3 095 147 B1**
(45) Date de publication et mention de la délivrance du brevet: **31.07.2019**
(21) Numéro de dépôt: 15706929.5
(22) Date de dépôt: 14.01.2015
(51) Int. Cl.: H01M 2/02, H01M 2/20, H01M 2/30, H01M 10/052, H01M 10/058, B23K 26/22, B23K 26/323, H01M 10/0525, B23K 101/38, B23K 103/08, B23K 103/10, B23K 103/12, B23K 103/16, B23K 103/18

(54) **ACCUMULATEUR ELECTROCHIMIQUE AVEC BOÎTIER ET BORNE DE SORTIE EN ALLIAGE D'ALUMINIUM**
ELEKTROCHEMISCHER AKKUMULATOR MIT GEHÄUSE UND TERMINAL BESTEHEND AUS EINER ALUMINIUMLEGIERUNG
ELECTROCHEMICAL ACCUMULATOR WITH HOUSING AND TERMINAL MADE OF ALUMINUM ALLOY

(30) Priorité: 16.01.2014 FR 1450346
(43) Date de publication de la demande: 23.11.2016
(73) Titulaire: Commissariat à l'Énergie Atomique et aux Énergies Alternatives, 75015 Paris (FR)
(72) Inventeur: DEWULF, Frédéric, F-38500 Voiron (FR); CHAMI, Marianne, F-38600 Fontaine (FR); LEYS, Côme-Emmanuel, F-38590 SILLANS (FR); MASSON, Olivier, F-38360 SASSENAGE (FR); JOST, Pierre, F-38220 Saint-Pierre de Mesage (FR)
(74) Mandataire: Nony
(86) Numéro de dépôt international: PCT/IB2015/050276
(87) Numéro de publication internationale: WO 2015/107464

(56) Documents cités:
- EP-A1- 2 445 035
- JP-A- 2003 223 885
- JP-A- 2007 103 352
- US-A1- 2013 224 536
- US-B1- 6 521 374
- BRUCE D. CRAIG AND DAVID S. ANDERSON: "HANDBOOK OF CORROSION DATA", 31 décembre 1995 (1995-12-31), ASM INTERNATIONAL, XP002738023, ISBN: 0-87170-518-4 pages 16-18, voir page 17, en particulier tableau 5 et " à et "Effects of Alloying Elements" et page 18 "Magnesium" et "Copper"
- "125-128,131-135,138-140" In: EDWARD GHALI: "CORROSION RESISTANCE OF ALUMINIUM AND MAGNESIUM ALLOYS. UNDERSTANDING, PERFORMANCE, AND TESTING", 31 décembre 2010 (2010-12-31), JOHN WILEY AND SONS INC., NEW JERSEY, XP002738024, ISBN: 978-0-471-71576-4 voir par exemple point 4.3.4.6 alliages 6061, 6013 et 6056; voir aussi point 4.3.4.7 alliage 7015.

## Description

### Domaine technique

La présente invention concerne le domaine des générateurs électrochimiques, qui fonctionnent selon le principe d'insertion ou de désinsertion, ou autrement dit intercalation- désintercalation, d'ions dans au moins une électrode.

Elle concerne plus particulièrement un accumulateur électrochimique comportant au moins une cellule électrochimique constituée d'au moins une anode et une cathode de part et d'autre d'un électrolyte, deux collecteurs de courant dont un est relié à l'anode et l'autre à la cathode, et un boitier en alliage d'aluminium agencé pour contenir la(les) cellule(s) électrochimique avec étanchéité tout en étant traversé par une partie des collecteurs de courant formant tout ou partie des bornes de sortie du courant ou pôles.

L'invention vise à proposer une réalisation d'une borne de sortie sur un boitier en alliage d'aluminium qui permette d'en assurer sa connexion mécanique et électrique avec une barrette métallique à base cuivre ou d'aluminium, appelée communément « busbar », afin de réaliser une interconnexion avec au moins un autre boitier d'accumulateur en vue de constituer un pack-batterie.

L'application principale visée par l'invention est la réalisation d'accumulateurs Li-ion.

Bien que décrite ci-après en référence à l'application principale, l'invention s'applique également à tout autre accumulateur électrochimique à boitier en alliage d'aluminium.

Les grades d'alliages d'aluminium indiqués et revendiqués dans le cadre de la présente invention sont ceux utilisés dans le système de désignation internationale des alliages d'aluminium pour corroyage, i.e. ceux destinés à être transformés par des techniques de forge (laminage, filage, matriçage, forge, ...) ou par usinage. Dans ce système de référence, chaque alliage porte un numéro à quatre chiffres définissant le grade, le premier chiffre indique les principaux éléments d'alliage.

Les diamètres de vis indiqués dans le cadre de la présente invention pour le serrage par vissage dans les filets taraudés d'une borne de sortie de courant sont ceux utilisant les symboles de la désignation du filetage métrique ISO.

### Etat de la technique

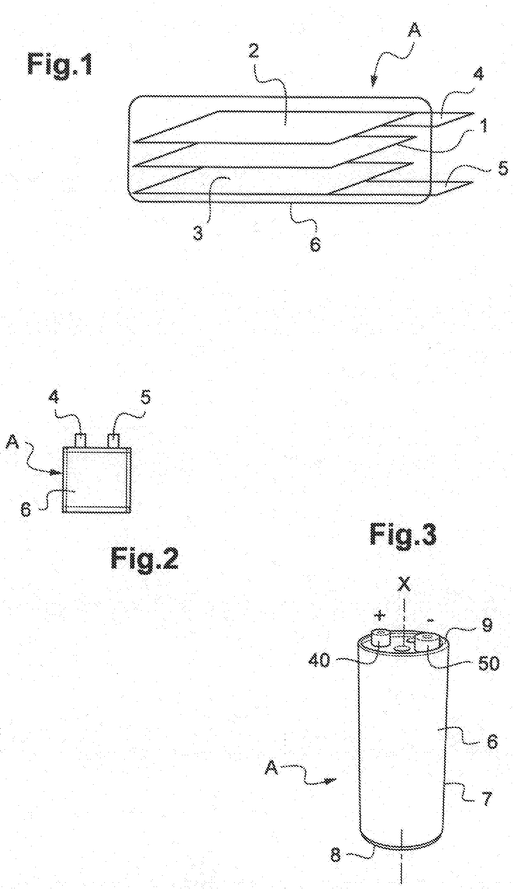

Telle qu'illustrée schématiquement en figures 1 et 2, une batterie ou accumulateur lithium-ion comporte usuellement au moins une cellule électrochimique C constituée d'un séparateur imprégné d'un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les deux bornes de sortie du courant.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, LiMn₂O₄, LiNiMnCoO₂ ou l'oxyde de nickel cobalt aluminium lithié LiNiCoAlO₂.

L'électrode négative ou anode est très souvent constituée de carbone, graphite ou en Li₄TiO₅O₁₂ (matériau titanate), éventuellement également à base de silicium ou à base de lithium, ou à base d'étain et de leurs alliages ou de composite formé à base de silicium.

L'anode et la cathode en matériau d'insertion au Lithium peuvent être déposées selon une technique usuelle sous la forme d'une couche active sur une feuille métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Traditionnellement, une batterie ou accumulateur Li-ion utilise un couple de matériaux à l'anode et à la cathode lui permettant de fonctionner à un niveau de tension élevé, typiquement autour de 3,6 Volt.

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à 10⁻⁶ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

Un des types de boitier rigide de forme cylindrique, usuellement fabriqué pour un accumulateur A Li-ion de forte capacité et à durée de vie supérieure à 10 ans, est illustré en figure 3.

Le boitier 6 d'axe longitudinal X comporte un conteneur avec une enveloppe latérale cylindrique 7 et un fond 8 à une extrémité, un couvercle 9 à l'autre extrémité. Le couvercle 9 supporte les pôles ou bornes de sortie du courant 40, 50. Une des bornes de sortie de courant (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

Usuellement, le conteneur et le couvercle d'un boitier d'accumulateur Li-ion sont réalisés en un alliage d'aluminium de grade 1050, contenant 99,5 % d'aluminium.

Usuellement également, on réalise la borne de sortie positive d'un accumulateur Li-ion en alliage d'aluminium de grade 1050 afin d'assurer la meilleure compatibilité par soudure avec le couvercle.

L'intégration des accumulateurs Li-ion en modules pour constituer un pack batterie notamment pour des applications de puissance implique de réaliser une interconnexion électrique des accumulateurs entre eux par des barrettes métalliques à base de cuivre ou d'aluminium (busbar).

Une solution mécanique fiable pour assurer la connexion mécanique et électrique des bornes positive et négative d'un accumulateur Li-ion à une barrette en cuivre ou en aluminium d'un busbar est le vissage. Or, cela est possible uniquement si la résistance à la rupture du matériau employé pour chacune des bornes permet d'effectuer un serrage à un couple élevé, typiquement supérieur à 4N.m pour un serrage avec une vis de type M5, afin d'assurer une force et une surface de contact suffisantes entre la borne et le busbar pour passer les courants nécessaires via l'accumulateur de charge et décharge en fonctionnement du pack- batterie.

Pour résoudre ce problème, les inventeurs de l'invention selon la demande de brevet EP 1 653 530 A1, ont clairement dissuadé toute réalisation de bornes en aluminium en considérant notamment que de telles bornes ne présentent pas de rigidité suffisante et qu'un couple de vissage trop important appliqué à leur filetage endommagerait ce dernier. On pourra notamment se reporter aux paragraphes [006] et [007] de cette demande de l'état de l'art. Ainsi, les inventeurs ont proposé selon cette demande antérieure un boitier d'accumulateur Li-ion, dont les deux bornes de sortie de courant, supportées par le couvercle, sont en cuivre et présentent chacune un épaulement permettant soit sa soudure par laser au couvercle, soit son sertissage sur ce dernier. Or, le coût d'une telle solution est élevé notamment du fait de l'utilisation du cuivre pour la réalisation des bornes.

Le document US 2013/224536 A1 décrit un accumulateur à géométrie prismatique comportant une borne positive en alliage d'aluminium qui est à la fois montée en tant que traversée par sertissage sur le couvercle du boîtier et soudée par laser à une plaque en aluminium rapportée sur le dessus et supportant une vis de fixation d'une barrette d'interconnexion (busbar) ou fil pour la sortie du courant.

L'utilisation de bornes positives en alliage d'aluminium au sein de batteries rechargeables est également divulguée dans les documents US 6 521 374 B1, EP 2 445 035 A1, JP 2003 223885 A et JP 2007 103352 A.

Il existe donc un besoin d'améliorer la réalisation d'au moins une borne de sortie d'un accumulateur électrochimique à boitier en alliage d'aluminium, notamment en vue de permettre une connexion mécanique et électrique fiable à une barrette métallique, appelée busbar, et ce, à moindre coût.

Il existe un besoin particulier d'améliorer la réalisation d'une borne de sortie positive d'un accumulateur Li-ion à boitier en alliage d'aluminium.

Le but de l'invention est de répondre au moins en partie à ce(s) besoin(s).

### Exposé de l'invention

Pour ce faire, l'invention a pour objet, sous un de ses aspects un accumulateur électrochimique comportant :
- au moins une cellule électrochimique constituée d'au moins une cathode et une anode de part et d'autre d'un électrolyte, deux collecteurs de courant dont un est relié à l'anode et l'autre à la cathode,
- un boitier en alliage d'aluminium, agencé pour contenir la(les) cellule(s) électrochimique(s) avec étanchéité,
- deux bornes de sortie de courant dont une est soudée à une paroi du boitier,
la borne de sortie soudée au boitier étant en un alliage à base d'aluminium comprenant une teneur en magnésium (Mg) supérieure ou égale à 0,01% et inférieure ou égale à 4%, et une teneur en cuivre supérieure ou égale à 0,05% et inférieure ou égale à 0,3%.

l'alliage d'aluminium de la borne de sortie soudée au boitier présentant un état métallurgique lui conférant une résistance à la rupture (Rm) supérieure ou égale à 160MPa.

De préférence, la teneur en Mg est inférieure ou égale à 3%. On évite ainsi les alliages susceptibles de subir des fissurations.

Par « alliage à base d'aluminium », on entend un alliage comprenant très majoritairement de l'aluminium, avec le cas échéant d'autres éléments en faible proportion, tels que Si, Mn, Zn, Fe, Ti, typiquement inférieure à 0,5%.

Selon un premier mode avantageux, l'alliage d'aluminium de la borne de sortie soudée au boitier est un grade 3003 avec un état écroui H₁₈. Pour un tel grade 3003, la teneur en Mg peut être avantageusement comprise entre 0,01 et 0,05%, et la teneur en cuivre (Cu) comprise entre 0,05 et 0,2%.

Selon un deuxième mode avantageux, l'alliage d'aluminium de la borne de sortie soudée au boitier est un grade 5754. Pour un tel grade 5754, la teneur en Mg peut être avantageusement comprise entre 2,6 et 3,2% et la teneur en cuivre (Cu) comprise entre 0,05 et 0,1%.

Selon un troisième mode avantageux, l'alliage d'aluminium de la borne de sortie soudée au boitier est un grade 6060. Pour un tel grade 6060, la teneur en Mg peut être avantageusement comprise entre 0,35 et 0,6% et la teneur en cuivre (Cu) comprise entre 0,05 et 0,1%.

Comparativement aux bornes de sortie de courant selon l'état de l'art, la borne de sortie conforme à l'invention est de moindre coût, le cours de l'aluminium en tant que matière première étant à ce jour de l'ordre de quatre fois moins élevé que celui du cuivre, et huit fois moins élevé que celui du nickel.

Par ailleurs, du fait d'une rigidité mécanique élevée, les filets de vissage qui sont taraudés au sein d'une borne de sortie conforme à l'invention ne sont pas susceptibles d'être endommagés dans le cas de plusieurs montages/ démontages, typiquement un nombre supérieur à deux, d'une barrette métallique d'interconnexion avec un autre accumulateur un busbar.

En outre, la résistance à la rupture élevée d'une borne de sortie selon l'invention permet de pouvoir appliquer un couple de serrage par vissage entre elle et un busbar à un niveau équivalent voire supérieur de celui applicable sur une borne à base de cuivre selon l'état de l'art. Typiquement ; le couple de serrage par vissage qui peut être appliqué sur une borne de sortie selon l'invention est supérieur à 4 N.m.

Parmi les alliages d'aluminium qui conviennent dans le cadre de l'invention, les grades 5754 et 6060 sont directement compatibles avec un grade d'aluminium 1050 habituellement utilisé pour un boitier, et ce afin d'assurer une conduction électrique continue, à résistivité électrique faible et relativement proche de celle du grade 1050.

Les grades d'aluminium 5754 ou 6060 sont par ailleurs compatibles avec un soudage par laser sur l'une des parois du boîtier, i.e. soit sur le couvercle, soit sur le fond du boitier. En effet, les structures métalliques de ces différents grades d'aluminium 5754, 1050, 6060 sont suffisamment proches pour assurer une qualité élevée des soudures laser réalisées. Avec un soudage au laser d'une borne de sortie en alliage d'aluminium selon l'invention, le procédé d'assemblage est simple, car il ne met en oeuvre que les deux pièces, à savoir la borne de sortie et le boitier, sans nécessiter d'apport de matière durant l'opération.

Les inventeurs de la présente invention ont vaincu un préjugé technique en mettant en oeuvre une borne de sortie positive en un alliage d'aluminium pour réaliser une connexion mécanique et électrique fiable à une barrette d'interconnexion (busbar). En effet, l'avis général des spécialistes d'accumulateurs Li-ion était qu'une borne de sortie pouvait être uniquement réalisée en cuivre, comme cela ressort explicitement de la demande EP1653530A1 mentionnée au préambule.

Selon une caractéristique avantageuse, la borne de sortie soudée au boitier est la borne positive.

Selon une variante avantageuse, la borne de sortie soudée au boitier est recouverte d'une couche de nickel (Ni), d'épaisseur de préférence comprise entre 2 et 20 µm. Une telle couche de Ni permet d'éviter la formation de couche d'alumine à la surface de la borne de sortie selon l'invention, couche d'alumine qui est susceptible de perturber la caractéristique électrique de contact de l'aluminium.

Avantageusement l'autre borne de sortie est fixée par sertissage ou vissage au travers d'une paroi du boitier.

L'autre borne de sortie est de préférence en cuivre (Cu) recouverte d'une couche de Ni ou en un alliage à base de Cu-Ni ou en un alliage à base d'aluminium.

Le boitier peut être de forme générale cylindrique ou prismatique.

L'accumulateur peut constituer avantageusement un accumulateur Li-ion. Dans ce dernier cas, la borne de sortie soudée au boitier, conformément à l'invention est la borne de sortie positive.

L'invention a également pour objet sous un autre de ses aspects, une batterie, dit pack-batterie, comportant une pluralité d'accumulateurs qui viennent d'être décrits, reliés en série ou en parallèle électrique entre eux, dont au moins les bornes de sortie positives sont reliées deux-à-deux au moyen d'une barrette métallique, appelée busbar, fixée par vissage sur chacune des bornes.

Le couple de serrage pour le vissage appliqué sur le chacune des bornes de sortie est de préférence supérieur à 4 N.m.

L'invention a enfin pour objet, sous un autre encore de ses aspects, un procédé de réalisation d'un accumulateur selon l'une des revendications précédentes, comportant l'étape i/ consistant à souder, de préférence au laser, la borne de sortie en alliage d'aluminium au couvercle ou au fond du boitier.

Ainsi, l'étape de soudage i/ est réalisée au moyen d'un laser sur toute la périphérie (360°) du bord de la borne de sortie en appui sur la face plane du couvercle ou du fond de boitier.

Selon une variante avantageuse, l'étape i/ est réalisée par un laser, la base de la borne présentant un profil incliné par rapport l'axe X1 selon lequel s'étend la borne de sortie, de sorte à éviter la réflexion à 180° d'un faisceau provenant du laser. Autrement dit, l'inclinaison du profil selon un certain angle non nul et différent de 90° par rapport à l'axe X1 de la borne de sortie permet d'éviter la réflexion du faisceau laser vers la lentille de son optique.

En fonction du type de matériaux d'électrode d'insertion au lithium choisi pour les électrodes constitutives d'une cellule électrochimique selon l'invention, le collecteur de courant formé par au moins une feuille métallique peut être en aluminium ou métallisée en surface d'un autre métal, par exemple en aluminium superposé à du cuivre.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi : oxyde de titane lithié ou non, par exemple Li₄Ti₅O₁₂ ou TiO₂. Plus particulièrement, le matériau d'électrode négative peut être choisi parmi les matériaux carbonés, les oxydes de titane non lithiès et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎Mₓ₁Ti₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1)}N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

De préférence, les anodes sont en Li₄Ti₅O₁₂ et les cathodes en LiFePO₄.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF₆, LiClO₄, LiBF₄ et LiAsF₆.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

Le dépôt de chaque électrode sur la portion conductrice électrique formant un collecteur de courant d'au moins un des dispositifs peut être réalisé par une technique d'impression usuelle telle que sérigraphie, héliographie, flexographie, spray,....

### Description détaillée

D'autres avantages et caractéristiques ressortiront mieux à la lecture de la description détaillée, faite à titre illustratif en référence aux figures suivantes parmi lesquelles :
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un accumulateur lithium-ion selon l'état de l'art avec son emballage rigide constitué d'un boitier de forme cylindrique ;
- la figure 4 est une vue de dessus du couvercle de boitier d'un accumulateur lithium-ion avec une borne de sortie positive selon l'invention;
- la figure 4A est une vue en coupe de détail d'une borne de sortie positive selon l'invention montrant l'étape de son soudage au couvercle de boitier d'un accumulateur Li-ion;
- la figure 4B est une reproduction photographique en perspective montrant une borne de sortie positive selon l'invention telle qu'elle est soudée au couvercle de boitier d'un accumulateur lithium-ion;
- les figures 5 et 5A sont des reproductions photographiques respectivement en perspective et en coupe montrant une borne de sortie positive selon l'invention, faite en alliage d'aluminium de grade 5754, telle qu'elle est soudée au couvercle de boitier d'un accumulateur lithium-ion;
- les figures 6 et 6A sont des reproductions photographiques respectivement en perspective et en coupe montrant une borne de sortie positive selon l'invention, faite en alliage d'aluminium de grade 6060, telle qu'elle est soudée au couvercle de boitier d'un accumulateur lithium-ion;
- la figure 7 est une représentation schématique d'un dispositif d'essais destinés à mesurer la résistance électrique de contact entre une borne de sortie positive d'un accumulateur Li-ion et une barrette en cuivre représentative d'un busbar ;
- la figure 8 illustre les courbes de résultats d'essai réalisés avec le dispositif de la figure 7 à la fois sur une borne de sortie en alliage d'aluminium selon l'état de l'art et des bornes de sortie selon l'invention ;
- les figures 9A et 9B sont des vues en perspective d'un accumulateur lithium-ion avec une borne de sortie positive selon l'invention et une borne négative soudées toutes deux à un couvercle de boitier respectivement de forme cylindrique et de forme prismatique ;
- les figures 10A à 10C sont des vues de côté d'un accumulateur lithium-ion avec un boitier de forme cylindrique illustrant différentes variantes d'agencement d'une borne de sortie positive selon l'invention soudée au fond de boitier et une borne négative soudée au couvercle de boitier;
- les figures 11A à 11C sont similaire aux figures 10A à 10C mais avec un boitier de forme prismatique ;
- la figure 12 est une vue schématique montrant un pack-batterie de deux modules en série d'accumulateurs Li-ion selon l'invention, chaque module étant constitué de quatre rangées d'accumulateurs en parallèle, chaque rangée étant constituée de six accumulateurs en série.

Par souci de clarté, les mêmes références désignant les mêmes éléments d'un accumulateur au lithium-ion selon l'état de l'art et selon l'invention sont utilisées pour toutes les figures 1 à 12.

On précise que les différents éléments selon l'invention sont représentés uniquement par souci de clarté et qu'ils ne sont pas à l'échelle.

On précise enfin qu'ici et dans l'ensemble de la présente demande, les termes « inférieur », « supérieur », « vertical », « remontée », « descente », « dessous » et « dessus » sont à comprendre par référence à un accumulateur Li-ion agencé en position verticale avec son couvercle sur l'extrémité du dessus du boitier.

Les figures 1 à 3 ont déjà été commentées en détail en préambule. Elles ne sont donc pas décrites ci-après.

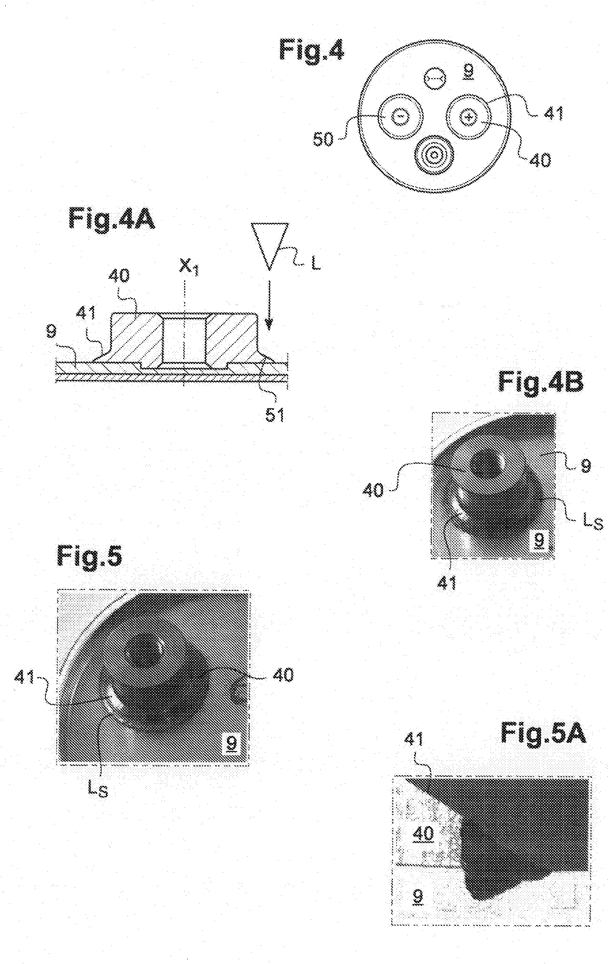

On a représenté un accumulateur A lithium-ion selon l'invention en figure 4.

L'accumulateur A comporte tout d'abord au moins une cellule électrochimique C, non représentée, constituée d'au moins une anode et une cathode de part et d'autre d'un électrolyte imprégné dans un séparateur.

L'anode et la cathode en matériau d'insertion au Lithium et peuvent être déposées selon une technique usuelle sous la forme d'une couche active sur une feuille métallique constituant un collecteur de courant. A titre d'exemple, l'anode est en Li₄Ti₅O₁₂, la cathode en LiFePO₄ et les feuilles de collecteurs de courant en aluminium.

L'accumulateur Li-ion comporte deux collecteurs de courant dont un est relié à l'anode et l'autre à la cathode de chaque cellule C.

En tant qu'emballage rigide, l'accumulateur comporte un boitier 6 de forme allongée selon un axe longitudinal (X).

Le boitier 6 comporte une enveloppe latérale cylindrique 7 et un fond 8 constituant un conteneur, un couvercle 9 assemblé par sertissage et soudure au conteneur à l'extrémité opposée du fond 8.

Le couvercle 9 supporte les pôles ou bornes de sortie du courant 40, 50.

Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

Le boitier 6, i.e. le conteneur constitué de l'enveloppe 7 et du fond 8, ainsi que le couvercle 9 sont tous en alliage d'aluminium 1050.

Selon l'invention, la borne positive 40 est en un alliage d'aluminium comprenant une teneur en magnésium (Mg) inférieure ou égale à 4%, et une teneur en cuivre inférieure ou égale à 0,3%, l'alliage d'aluminium présentant un état métallurgique lui conférant une résistance à la rupture (Rm) supérieure ou égale à 160MPa.

Avec de telles valeurs, comme expliqué par la suite, les inventeurs ont pu prouver qu'une connexion mécanique et électrique fiable pouvait être réalisée avec une barrette métallique d'interconnexion vissée dans la borne positive 40.

Pour réaliser le soudage de la borne positive 40 en alliage d'aluminium selon l'invention au couvercle 9 du boitier 6, on a procédé par soudage laser comme représenté en figure 4A.

La borne positive 40 est au préalable mise en appui contre la face plane du couvercle 9.

On dirige alors le faisceau d'un laser L vers la base 41 de la borne 40 comme symbolisé par la flèche vers le bas en figure 4A.

Comme illustré, le profil de la base 41 incliné par rapport l'axe X1 selon lequel s'étend la borne de sortie 40, est adapté pour éviter la réflexion à 180° d'un faisceau provenant du laser. On évite ainsi une réflexion du faisceau laser vers la lentille de son optique. Le soudage laser sur toute la périphérie (360°) de la base 41.

La borne 40 ainsi soudée par sa base 41 selon la ligne de soudure Ls au couvercle 9, comme illustré en figure 4B.

Les figures 5 et 5A illustrent la soudure d'une borne positive 40 en alliage d'aluminium de grade 5754. La profondeur de pénétration de la soudure a été mesurée à 0,286 mm et la section de passage du courant est égale à 22,4 mm².

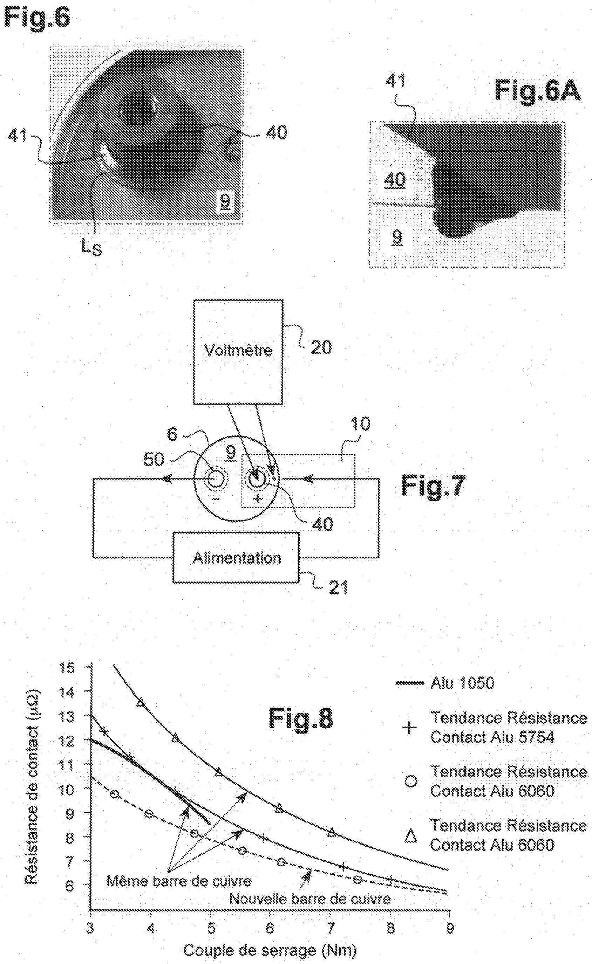

Les figures 6 et 6A illustrent la soudure avec un alliage d'aluminium de grade 6060. La profondeur de pénétration de la soudure a été mesurée à 0,169 mm et la section de passage du courant est égale à 17,1 mm².

On a réalisé des essais de caractérisation au couple de serrage de filets dont le taraudage de bornes positives 40 selon l'invention, soudées chacune à un boitier 6 en aluminium de grade 1050.

Les résultats sont donnés dans le tableau ci-dessous pour un alliage d'aluminium de grade 5754 et un de grade 6060.

| Alliage Al Borne positive 40 | Diamètre de vis de serrage | Longueur du taraudage en mm | Valeur du couple de serrage en N.m |
|---|---|---|---|
| 5754 | | 6 | 6,14 |
| | | 6 | 8,01 |
| | | 6 | 8,08 |
| | | 8 | 8,3 |
| | | 8 | 9,82 |
| | | 8 | supérieur à 9,3 |
| | | 10 | supérieur à 11,4 |
| | | 10 | supérieur à 10 |
| | M5 | 10 | supérieur à 10 |
| 6060 | | 6 | supérieur à 3,6 |
| | | 6 | 7,5 |
| | | 6 | 7,24 |
| | | 8 | 10,4 |
| | | 8 | supérieur à 10 |
| | | 8 | supérieur à 10 |
| | | 10 | supérieur à 10,3 |
| | | 10 | supérieur à 10 |
| | | 10 | supérieur à 10 |

Ces résultats montrent que l'on peut envisager des couples de serrage de l'ordre de ou supérieurs à 4N.m avec des vis usuelles de type M5.

On a réalisé également des essais de caractérisation de la résistance de contact entre la surface d'une borne positive 40 et celle d'une barrette en cuivre nickelé représentative d'un busbar, en fonction de la nature des matériaux aluminium de la borne positive et du couple de serrage par vissage à l'aide d'une vis de type M5.

Le dispositif d'essai utilisé est représenté en figure 7 : une barrette 10 en cuivre nickelé est serrée par vissage à la borne positive 40 soudée à un couvercle 9 d'un accumulateur Li-ion. On précise ici que la vis de serrage utilisée est une vis BHC de type M5^{∗}8, une rondelle de dénomination commerciale Onduflex et une rondelle en acier Z5 étant interposées entre la vis et la borne positive 40. Les même vis et rondelles sont utilisées pour assurer le serrage d'un fil d'alimentation électrique à la borne négative 50.

Un autre fil d'alimentation électrique est fixé à la barrette 10.

Pour réaliser les essais, on alimente électriquement la barrette 10 à l'aide d'une alimentation 21 délivrant un fort courant de 200 A, puis on mesure le potentiel électrique entre la barrette 10 et la borne positive 40 à l'aide d'un voltmètre 20, ce qui permet d'en déduire par calcul la résistance de contact entre les deux pièces.

Les résultats d'essais sont illustrés sous forme de courbes en figure 8 pour des bornes positives 40 en alliages 5754 et 6060 conformes à l'invention et à titre comparatif, pour une borne 40 en alliage 1050.

De ces essais de caractérisation, on peut en conclure qu'il est clairement possible de diminuer la résistance de contact entre barrette de cuivre 10 et surface de la borne positive 40 en alliage d'aluminium 5754 ou 6060 pour des couples de serrage supérieurs à 5 N.m.

On constate en outre que, pour une borne positive 40 en alliage d'Al 1050, il n'est pas possible dans les même conditions d'essai, de réaliser un serrage au-delà de 5N.m sans dégradation irréversible des filets de son taraudage.

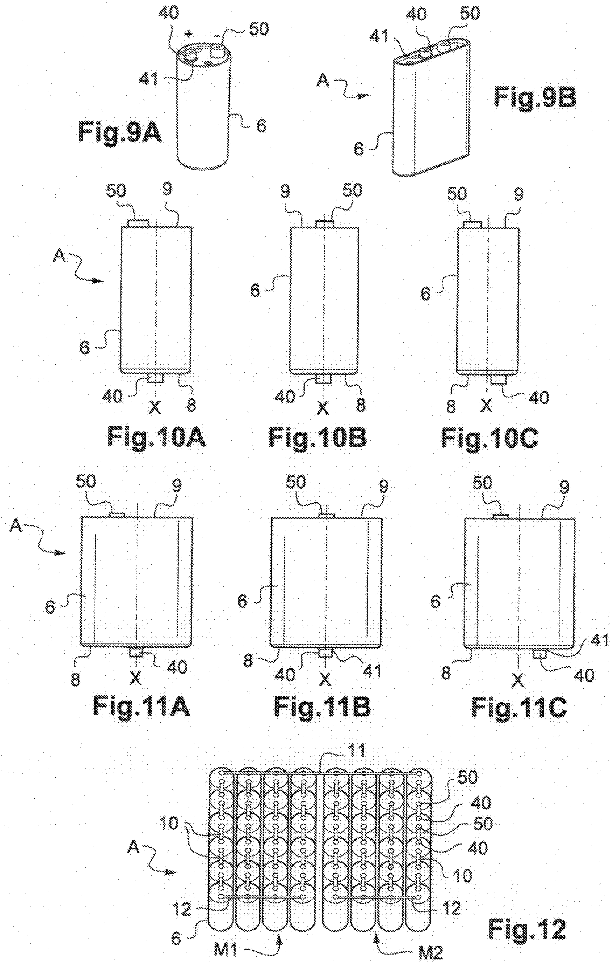

L'assemblage par soudure laser de la base 41 à profil incliné de la borne de sortie 40 à une paroi du boitier est simple à mettre en oeuvre et il permet d'envisager différents agencements suivants :
- borne positive 40 en alliage d'aluminium selon l'invention et borne négative 50 supportées par le couvercle 9 de boitier 6 de forme cylindrique (figure 9A) ou prismatique (figure 9B) ;
- borne positive 40 en alliage d'aluminium selon l'invention supportée par le fond 8 de boitier 6 et borne négative 50 supportée par le couvercle 9 de boitier 6 de forme cylindrique, avec la borne négative 50 décalée latéralement par rapport à l'axe X du boitier 6 et la borne positive dans l'axe X du boitier 6 (figure 10A), ou les deux bornes positive 40 et négative 50 dans l'axe X du boitier (figure 10B), ou les deux bornes positive 40 et négative 50 décalées latéralement de l'axe X du boitier (figure 10C) ;
- borne positive 40 en alliage d'aluminium selon l'invention supportée par le fond 8 de boitier 6 et borne négative 50 supportée par le couvercle 9 de boitier 6 de forme prismatique, avec la borne négative 50 décalée latéralement par rapport à l'axe X du boitier 6 et la borne positive dans l'axe X du boitier 6 (figure 11A), ou les deux bornes positive 40 et négative 50 dans l'axe X du boitier (figure 11B), ou les deux bornes positive 40 et négative 50 décalées latéralement de l'axe X du boitier (figure 11C).

L'invention qui vient d'être décrite permet d'envisager la réalisation de pack-batteries, comportant une pluralité d'accumulateurs Li-ion, reliés en série ou en parallèle électrique entre eux, dont au moins les bornes de sortie positives 40 sont reliées deux-à-deux au moyen d'un busbar en cuivre 10, 11, 12, fixée par vissage sur chacune des bornes avec un couple de vissage appliqué sur chacune des bornes de sortie supérieur à 4N.m.

Un tel pack-batterie est montré en figure 12 : il est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égale à six accumulateurs Li-ion.

Comme représenté, la connexion mécanique et électrique entre deux accumulateurs Li-ion d'une même rangée est réalisée par vissage de busbars 10 en Cu reliant chacune une borne positive 40 et une borne négative 50. La connexion entre les deux modules M1, M2 est assurée par un busbar 11 en Cu et la connexion entre deux rangées d'accumulateurs en parallèle au sein d'un même module M1 ou M2 est assurée par un busbar 12 en Cu.

L'invention n'est pas limitée aux exemples qui viennent d'être décrits ; on peut notamment combiner entre elles des caractéristiques des exemples illustrés au sein de variantes non illustrées.

Ainsi, si dans les exemples illustrés, la borne (pôle) selon l'invention sert de borne positive 40 à la batterie, elle peut aussi servir de borne à un pack-batterie. La borne de sortie selon l'invention peut également ne pas être reliée à une cellule électrochimique. Elle peut aussi être reliée à des composants de la batterie ou à des systèmes connectés à la batterie.

## Revendications

1. Accumulateur électrochimique (A) comportant :
- au moins une cellule électrochimique constituée d'au moins une cathode (2) et d'une anode (3) et de part et d'autre d'un électrolyte (1), deux collecteurs de courant dont un est relié à l'anode et l'autre à la cathode,
- un boitier (6) en alliage d'aluminium, agencé pour contenir la(les) cellule(s) électrochimique(s) avec étanchéité,
- deux bornes de sortie de courant (40, 50) dont une (40) est soudée à une paroi (8,9) du boitier,
la borne de sortie soudée au boitier étant en un alliage à base d'aluminium comprenant une teneur en magnésium (Mg) supérieure ou égale à 0,01% et inférieure ou égale à 4%, et une teneur en cuivre supérieure ou égale à 0,05% et inférieure ou égale à 0,3%.
l'alliage d'aluminium de la borne de sortie soudée au boitier présentant un état métallurgique lui conférant une résistance à la rupture (Rm) supérieure ou égale à 160MPa.

2. Accumulateur la revendication 1, l'alliage d'aluminium de la borne de sortie soudée au boitier étant un grade 3003 avec un état écroui H₁₈.

3. Accumulateur la revendication 1, l'alliage d'aluminium de la borne de sortie soudée au boitier étant un grade 5754.

4. Accumulateur la revendication 1, l'alliage d'aluminium de la borne de sortie soudée au boitier étant un grade 6060.

5. Accumulateur selon l'une des revendications précédentes, la borne de sortie soudée au boitier étant la borne positive.

6. Accumulateur selon l'une des revendications précédentes, la borne de sortie soudée au boitier étant recouverte d'une couche de nickel (Ni).

7. Accumulateur selon la revendication 6, la couche de Ni ayant une épaisseur comprise entre 2 et 20 µm.

8. Accumulateur selon l'une des revendications précédentes, l'autre (50) borne de sortie étant fixée par sertissage ou vissage au travers d'une paroi (8, 9) du boitier.

9. Accumulateur selon l'une des revendications précédentes, l'autre borne de sortie étant en cuivre (Cu) recouverte d'une couche de Ni ou en un alliage à base de Cu-Ni ou en un alliage à base d'aluminium.

10. Accumulateur selon l'une des revendications 2 à 9, constituant un accumulateur Li-ion.

11. Batterie, dit pack-batterie, comportant une pluralité d'accumulateurs (M1, M2) selon l'une des revendications précédentes, reliés en série ou en parallèle électrique entre eux, dont au moins les bornes de sortie positives sont reliées deux-à-deux au moyen d'une barrette métallique, appelée busbar, fixée par vissage sur chacune des bornes.

12. Batterie selon la revendication 11, le couple de vissage appliqué sur chacune des bornes de sortie étant supérieur à 4N.m.

13. Procédé de réalisation d'un accumulateur selon l'une des revendications précédentes, comportant l'étape i/ consistant à souder, de préférence au laser, la borne de sortie (40) en alliage d'aluminium (40) au couvercle (9) ou au fond (8) du boitier.

14. Procédé selon la revendication précédente, l'étape i/ étant réalisée au moyen d'un laser (L) à la base (41) de la borne (40) dont le profil incliné par rapport l'axe X1 selon lequel s'étend la borne de sortie, est adapté pour éviter la réflexion à 180° d'un faisceau provenant du laser.

## Patentansprüche

1. Elektrochemischer Akkumulator (A), welcher aufweist:
- wenigstens eine elektrochemische Zelle, die aus wenigstens einer Kathode (2) und einer Anode (3) beiderseits eines Elektrolyten (1) und zwei Stromkollektoren, von denen einer mit der Anode und der andere mit der Kathode verbunden ist, besteht,
- ein Gehäuse (6) aus Aluminiumlegierung, das dafür ausgelegt ist, die elektrochemische(n) Zelle(n) dichtend zu umschließen,
- zwei Stromausgangsklemmen (40, 50), von denen eine (40) an eine Wand (8, 9) des Gehäuses angeschweißt ist,
wobei die an das Gehäuse angeschweißte Ausgangsklemme aus einer Legierung auf der Basis von Aluminium besteht, die einen Gehalt an Magnesium (Mg), der größer oder gleich 0,01 % und kleiner oder gleich 4 % ist, und einen Gehalt an Kupfer, der größer oder gleich 0,05 % und kleiner oder gleich 0,3 % ist, umfasst,
wobei die Aluminiumlegierung der an das Gehäuse angeschweißten Ausgangsklemme einen metallurgischen Zustand aufweist, der ihr eine Zugfestigkeit (Rm) verleiht, die größer oder gleich 160 MPa ist.

2. Akkumulator nach Anspruch 1, wobei die Aluminiumlegierung der an das Gehäuse angeschweißten Ausgangsklemme eine Aluminiumlegierung 3003 mit einem kaltverfestigten Zustand H₁₈ ist.

3. Akkumulator nach Anspruch 1, wobei die Aluminiumlegierung der an das Gehäuse angeschweißten Ausgangsklemme eine Aluminiumlegierung 5754 ist.

4. Akkumulator nach Anspruch 1, wobei die Aluminiumlegierung der an das Gehäuse angeschweißten Ausgangsklemme eine Aluminiumlegierung 6060 ist.

5. Akkumulator nach einem der vorhergehenden Ansprüche, wobei die an das Gehäuse angeschweißte Ausgangsklemme de positive Klemme ist.

6. Akkumulator nach einem der vorhergehenden Ansprüche, wobei die an das Gehäuse angeschweißte Ausgangsklemme mit einer Schicht Nickel (Ni) bedeckt ist.

7. Akkumulator nach Anspruch 6, wobei die Ni-Schicht eine Dicke zwischen 2 und 20 µm aufweist.

8. Akkumulator nach einem der vorhergehenden Ansprüche, wobei die andere (50) Ausgangsklemme durch Crimpen oder Verschrauben durch eine Wand (8, 9) des Gehäuses hindurch befestigt ist.

9. Akkumulator nach einem der vorhergehenden Ansprüche, wobei die andere Ausgangsklemme aus Kupfer (Cu), das mit einer Ni-Schicht bedeckt ist, oder aus einer Legierung auf der Basis von Cu-Ni oder aus einer Legierung auf der Basis von Aluminium besteht.

10. Akkumulator nach einem der Ansprüche 2 bis 9, welcher einen Li-Ionen-Akkumulator bildet.

11. Batterie, Batteriepack genannt, welche mehrere Akkumulatoren (M1, M2) nach einem der vorhergehenden Ansprüche aufweist, die elektrisch in Reihe oder parallel miteinander verbunden sind, von denen wenigstens die positiven Ausgangsklemmen paarweise mittels eines Metallstabes, Sammelschiene genannt, verbunden sind, der durch Verschraubung an jeder der Klemmen befestigt ist.

12. Batterie nach Anspruch 11, wobei das an jeder der Ausgangsklemmen angewendete Schraubenanzugsmoment größer als 4 N.m ist.

13. Verfahren zur Herstellung eines Akkumulators nach einem der vorhergehenden Ansprüche, welches den Schritt i/ aufweist, der darin besteht, die Ausgangsklemme (40) aus Aluminiumlegierung (40), vorzugsweise mittels Laser, an den Deckel (9) oder an den Boden (8) des Gehäuses zu schweißen.

14. Verfahren nach dem vorhergehenden Anspruch, wobei der Schritt i/ mittels eines Lasers (L) am Fuß (41) der Klemme (40) ausgeführt wird, dessen bezüglich der Achse X1, entlang der sich die Ausgangsklemme erstreckt, geneigtes Profil dafür ausgelegt ist, die Reflexion eines von dem Laser kommenden Lichtbündels mit 180° zu vermeiden.

## Claims

1. An electrochemical accumulator (A) including:
- at least one electrochemical cell consisting of at least one cathode (2) and one anode (3) and on either side of an electrolyte (1), two current collectors one of which is connected to the anode and the other to the cathode,
- a casing (6) made of aluminum alloy, arranged to contain the electrochemical cell(s) with seal tightness,
- two current output terminals (40, 50) one (40) of which is welded to a wall (8,9) of the casing,
the output terminal welded to the casing being made of an aluminum-based alloy comprising a magnesium (Mg) content higher than or equal to 0.01% and lower than or equal to 4%, and a copper content higher than or equal to 0.05% and lower than or equal to 0.3%,
the aluminum alloy of the output terminal welded to the casing having a metallurgical state providing it with a yield strength (Rm) higher than or equal to 160 MPa.

2. The accumulator as claimed in claim 1, the aluminum alloy of the output terminal welded to the casing being a 3003 grade with an H₁₈ temper.

3. The accumulator as claimed in claim 1, the aluminum alloy of the output terminal welded to the casing being a 5754 grade.

4. The accumulator as claimed in claim 1, the aluminum alloy of the output terminal welded to the casing being a 6060 grade.

5. The accumulator as claimed in claim 1, the aluminum alloy of the output terminal welded to the casing being the positive terminal.

6. The accumulator as claimed in one of the preceding claims, the aluminum alloy of the output terminal welded to the casing being covered with a layer of nickel (Ni).

7. The accumulator as claimed in claim 6, the layer of Ni having a thickness comprised between 2 and 20 µm.

8. The accumulator as claimed in one of the preceding claims, the other (50) output terminal being fastened by crimping or screwing through a wall (8, 9) of the casing.

9. The accumulator as claimed in one of the preceding claims, the other output terminal being made of copper (Cu) covered with a layer of Ni or made of a Cu-Ni-based alloy or an aluminum-based alloy.

10. The accumulator as claimed in one of claims 2 to 9, constituting an Li-ion accumulator.

11. A battery, referred to as a battery pack, including a plurality of accumulators (M1, M2) as claimed in one of the preceding claims, said accumulators being connected together in electrical parallel or series, at least the positive output terminals of said accumulators being connected pairwise by means of a metal strip, referred to as a bus bar, fixed by screwing to each of the terminals.

12. The battery as claimed in claim 11, the screwing torque applied to each of the output terminals being higher than 4 N.m.

13. A process for producing an accumulator as claimed in one of the preceding claims, including the step i/ consisting in welding and preferably laser welding the output terminal (40) made of aluminum alloy (40) to the cover (9) or to the bottom (8) of the casing.

14. The process as claimed in the preceding claim, the step i/ being carried out by means of a laser (L) at the base (41) of the terminal (40) the inclined profile of which, with respect to the axis X1 along which the output terminal extends, is adapted to prevent the reflection at 180° of a beam coming from the laser.
